(19)

Europäisches
Patentamt
European
Patent Office
Office européen
des brevets

(11) **EP 3 910 289 B1**

(12) **EUROPEAN PATENT SPECIFICATION**

(45) Date of publication and mention
of the grant of the patent:
**19.04.2023   Bulletin 2023/16**

(21) Application number: **20213091.0**

(22) Date of filing: **10.12.2020**

(51) International Patent Classification (IPC):
***G01C 21/16*** (2006.01)

(52) Cooperative Patent Classification (CPC):
**G01C 21/183; G01C 21/165**

(54) **METHOD, APPARATUS, DEVICE AND MEDIUM FOR CALIBRATING TEMPERATURE DRIFT**

VERFAHREN, GERÄT, VORRICHTUNG UND MEDIUM ZUR KALIBRIERUNG VON
TEMPERATURDRIFT

PROCÉDÉ, APPAREIL ET DISPOSITIF ET SUPPORT PERMETTANT D'ÉTALONNER UNE DÉRIVE
EN TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **14.05.2020   CN 202010408689**

(43) Date of publication of application:
**17.11.2021   Bulletin 2021/46**

(73) Proprietor: **Apollo Intelligent Connectivity
(Beijing)
Technology Co., Ltd.
Beijing 100176 (CN)**

(72) Inventors:
• **LI, Bing
Beijing, 100085 (CN)**
• **ZHOU, Zhipeng
Beijing, 100085 (CN)**

(74) Representative: **Lucke, Andreas
Boehmert & Boehmert
Anwaltspartnerschaft mbB
Pettenkoferstrasse 22
80336 München (DE)**

(56) References cited:
EP-A1- 2 927 641          CN-A- 106 403 999
US-A- 5 527 003           US-A1- 2010 292 943
US-A1- 2017 329 019

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

Embodiments of the present invention relate to computer technology, specifically to in-vehicle map technology, and more specifically to a method, apparatus, device, and medium for calibrating a temperature drift.

BACKGROUND

In the field of on-board map technology, a built-in inertial measurement unit of a traveling device is one of the most important sensors. The implementation of any navigation dead reckoning algorithm directly depends on the inertial measurement unit. Therefore, the performance of the inertial measurement unit directly affects the accuracy and reliability of the navigation dead reckoning algorithm.

However, the inertial measurement unit may have a temperature drift due to temperature changes. Temperature drift is caused by temperature factors and is a numerical deviation of a result value output by a mechanical part in the inertial measurement unit such as an accelerometer, a gyroscope and the like, relative to a result value output by the mechanical part with no temperature drift. As a result, the temperature drift may cause the decrease of the accuracy of the navigation dead reckoning algorithm.

However, in the existing technology, there is no specific technical solution for determining a current temperature drift value of the inertial measurement unit.

US 2017/0329019A1 discloses obtaining an output of an accelerometer, comparing the output with a speed of a GNSS receiver, and adjusting a bias as needed.

CN 106403999A discloses calculating a bias of an acceleration value of an accelerometer using speed values derived from accelerometer data and from GNSS data.

US 2010/0292943A1 discloses a technique for updating a bias of an accelerometer in a stationary state.

SUMMARY

The present invention refers to a method, an apparatus, a device, and a medium for calibrating a temperature drift, to realize a technical effect of determining a current temperature drift value of an inertial measurement unit in real time.

A first aspect of the invention refers to a method for calibrating a temperature drift according to claim 1. The method includes:

acquiring a first measurement value and a second measurement value; the first measurement value being a measurement value of a to-be-measured quantity at a current moment determined based on an inertial measurement unit, and the second measurement value being a measurement value of the to-be-measured quantity at the current moment determined based on a global positioning system; and

determining a temperature drift calibration value of the inertial measurement unit at the current moment based on the first measurement value and the second measurement value.

Embodiments of the above invention have the following advantages or beneficial effects: by using the measurement value of the to-be-measured quantity at the current moment determined based on the inertial measurement unit as the first measurement value, and using the measurement value of the to-be-measured quantity at the current moment determined based on the global positioning system as the second measurement value, and finally determining the temperature drift calibration value of the inertial measurement unit at the current moment based on the first measurement value and the second measurement value, a technical effect of determining the current temperature drift calibration value of the inertial measurement unit in real time is achieved, which lays a data foundation for subsequent compensation of the temperature drift in a navigation dead reckoning algorithm, thereby improving the accuracy of a navigation result.

According to the invention, the determining a temperature drift calibration value of the inertial measurement unit at the current moment based on the first measurement value and the second measurement value, includes:

determining a difference between the first measurement value and the second measurement value;

acquiring a temperature drift calibration value of the inertial measurement unit in a stationary state; and

determining the temperature drift calibration value of the inertial measurement unit at the current moment, based on the difference and the temperature drift calibration value of the inertial measurement unit in the stationary state.

Embodiments of the above invention have the following advantages or beneficial effects: by determining the temperature drift calibration value of the inertial measurement unit at the current moment, based on the difference between the first measurement value and the second measurement value and the temperature drift calibration value of the inertial measurement unit in the stationary state, since calculation of the temperature drift calibration value in the stationary state is relatively accurate, the temperature drift calibration value in the stationary state is used as a calculation item, which may improve the accuracy of the finally determined temperature drift calibration value of the inertial measurement unit at the current moment.

According to the invention, the to-be-measured quantity is speed, the first measurement value is a first speed value, the second measurement value is a second speed value, and the temperature drift calibration value of the inertial measurement unit in the stationary state is a temperature drift calibration value of an accelerometer of the inertial measurement unit in the stationary state;

correspondingly, the determining the temperature drift calibration value of the inertial measurement unit at the current moment, based on the difference and the temperature drift calibration value of the inertial measurement unit in the stationary state, includes:

determining a temperature drift calibration value of the accelerometer of the inertial measurement unit at the current moment, based on a difference between the first speed value and the second speed value, the temperature drift calibration value of the accelerometer of the inertial measurement unit in the stationary state, and an acceleration value output by the accelerometer at the current moment.

Embodiments of the above invention have the following advantages or beneficial effects: by determining the temperature drift calibration value of the accelerometer of the inertial measurement unit at the current moment, based on the difference between the first speed value and the second speed value, the temperature drift calibration value of the accelerometer of the inertial measurement unit in the stationary state, and the acceleration value output by the accelerometer at the current moment, a technical effect of determining the current temperature drift calibration value of the accelerometer of the inertial measurement unit in real time is achieved, which lays a data foundation for subsequent compensation of the accelerometer temperature drift in a navigation dead reckoning algorithm, thereby improving the accuracy of a navigation result.

Alternatively, the determining a temperature drift calibration value of the accelerometer of the inertial measurement unit at the current moment, based on a difference between the first speed value and the second speed value, the temperature drift calibration value of the accelerometer of the inertial measurement unit in the stationary state, and an acceleration value output by the accelerometer at the current moment, includes:

determining the temperature drift calibration value *bias*1 of the accelerometer of the inertial measurement unit at the current moment according to a formula as follows:

$$Delta\_v = ((a - bias0 - bias1) * delta\_time1) * scale1 \text{ ;}$$

where, *Delta_v* is the difference between the first speed value and the second speed value, *a* is the acceleration value output by the accelerometer at the current moment, *bias*0 is the temperature drift calibration value of the accelerometer of the inertial measurement unit in the stationary state, *delta_time*1 is integral calculation time corresponding to the accelerometer of the inertial measurement unit, and *scale*1 is a preset scale value.

Embodiments of the above invention have the following advantages or beneficial effects: based on the difference between the first speed value and the second speed value, the acceleration value output by the accelerometer at the current moment, the temperature drift calibration value of the accelerometer of the inertial measurement unit in the stationary state, the integral calculation time corresponding to the accelerometer, and the preset scale value, a technical effect of more accurate determination of the temperature drift calibration value of the accelerometer at the current moment is achieved.

According to the invention, the determining the temperature drift calibration value of the accelerometer of the inertial measurement unit in the stationary state, includes:

acquiring an acceleration value output by the accelerometer of the inertial measurement unit in the stationary state within a first preset period;

determining an initial temperature drift value of the accelerometer of the inertial measurement unit in the stationary state based on the acceleration value within the first preset period, wherein the acceleration values within the first preset period are divided into segments, and an average value corresponding to each segment is calculated, and the median of the average values is used as the initial temperature drift value of the accelerometer of the inertial measurement unit in the stationary state;

determining an initial speed value based on the acceleration value within the first preset period and the initial temperature drift value; and

determining the temperature drift calibration value of the accelerometer of the inertial measurement unit in the stationary state based on the initial speed value.

Embodiments of the above invention have the following advantages or beneficial effects: by determining the initial temperature drift value of the accelerometer of the inertial measurement unit in the stationary state based on the acceleration value within the first preset period, determining the initial speed value based on the acceleration value within the first preset period and the initial temperature drift value; and finally determining the temperature drift calibration value of the accelerometer of the inertial measurement unit in the stationary state based on the initial speed value, a technical effect of determining the temperature drift calibration value of the accelerometer in the stationary state is achieved, which lays a data foundation for subsequent determination of the temperature drift calibration value of the accelerometer at the current moment, based on the temperature drift calibration value of the accelerometer in the stationary state.

Alternatively, the determining the temperature drift calibration value of the accelerometer of the inertial measurement unit in the stationary state based on the initial speed value, includes:

determining the initial temperature drift value as the temperature drift calibration value of the accelerometer of the inertial measurement unit in the stationary state, if the initial speed value is o; and

correcting the initial temperature drift value to obtain the temperature drift calibration value of the accelerometer of the inertial measurement unit in the stationary state, if the initial speed value is not o.

Embodiments of the above invention have the following advantages or beneficial effects: by comparing the initial speed value with o, if the initial speed value is o, it indicates that the determined initial temperature drift value is accurate, so the initial temperature drift value is determined as the temperature drift calibration value of the accelerometer of inertial measurement unit in the stationary state; and if the initial speed value is not o, it indicates that the determined initial temperature drift value is deviated, so the initial temperature drift value is corrected, and the corrected initial temperature drift value is used as the temperature drift calibration value of the accelerometer in the stationary state.

Alternatively, after the determining the temperature drift calibration value of the accelerometer of the inertial measurement unit in the stationary state based on the initial speed value, the method further includes:

acquiring an acceleration value output by the accelerometer of the inertial measurement unit within a second preset period, when the inertial measurement unit is in the stationary state again; and

updating the temperature drift calibration value of the accelerometer of the inertial measurement unit in the stationary state, based on the acceleration value within the second preset period.

Embodiments of the above invention have the following advantages or beneficial effects: by updating the temperature drift calibration value of the accelerometer in the stationary state, based on the acceleration value output by the accelerometer within the second preset period, when the inertial measurement unit is in the stationary state again, a technical effect of updating the temperature drift calibration value of the accelerometer in the stationary state is achieved, so that the accuracy of the temperature drift calibration value of the accelerometer in the stationary state can be guaranteed even when the traveling device switches from moving to stopping for multiple times, thus ensuring the accuracy of the temperature drift calibration value of the accelerometer at the current moment.

According to some examples not belonging to the subject-matter defined in the claims of the present application, but useful for the understanding thereof, the to-be-measured quantity is an angle, the first measurement value is a first attitude angle, the second measurement value is a second attitude angle, and the temperature drift calibration value of the inertial measurement unit in the stationary state is a temperature drift calibration value of a gyroscope of the inertial measurement unit in the stationary state;

correspondingly, the determining the temperature drift calibration value of the inertial measurement unit at the current moment, based on the difference and the temperature drift calibration value of the inertial measurement unit in the stationary state, includes:

determining a temperature drift calibration value of the gyroscope of the inertial measurement unit at the current moment, based on a difference between the first attitude angle and the second attitude angle, the temperature drift calibration value of the gyroscope of the inertial measurement unit in the stationary state, and an angular velocity value output by the gyroscope at the current moment.

These examples have the following advantages or beneficial effects: by determining the temperature drift calibration value of the gyroscope of the inertial measurement unit at the current moment, based on the difference between the first attitude angle and the second attitude angle, the temperature drift calibration value of the gyroscope of the inertial measurement unit in the stationary state, and the angular velocity value output by the gyroscope at the current moment, a technical effect of determining the current temperature drift calibration value of the gyroscope of the inertial measurement unit in real time is achieved, which lays a data foundation for subsequent compensation of the gyroscope temperature drift in a navigation dead reckoning algorithm, thereby improving the accuracy of a navigation result.

Alternatively, according to further examples not belonging to the subject-matter defined in the claims of the present application, but useful for the understanding thereof, the determining a temperature drift calibration value of the gyroscope of the inertial measurement unit at the current moment, based on a difference between the first attitude angle and the second attitude angle, the temperature drift calibration value of the gyroscope of the inertial measurement unit in the stationary state, and an angular velocity value output by the gyroscope at the current moment, includes:

determining the temperature drift calibration value $bias3$ of the gyroscope of the inertial measurement unit at the current moment according to a formula as follows:

$$Delta\_yaw = ((g - bias2 - bias3) * delta\_time2) * scale2$$

where, $Delta\_yaw$ is the difference between the first attitude angle and the second attitude angle, $g$ is the angular velocity value output by the gyroscope at the current moment, $bias2$ is the temperature drift calibration value of the gyroscope of the inertial measurement unit in the stationary state, $delta\_time2$ is integral calculation time corresponding to the gyroscope of the inertial measurement unit, and $scale2$ is a preset scale value.

These examples have the following advantages or beneficial effects: based on the difference between the first attitude angle and the second attitude angle, the angular velocity value output by the gyroscope at the current moment, the temperature drift calibration value of the gyroscope of the inertial measurement unit in the stationary state, the integral calculation time corresponding to the gyroscope, and the preset scale value, a technical effect of more accurate determination of the temperature drift calibration value of the gyroscope at the current moment is achieved.

According to further examples not belonging to the subject-matter literally defined in the claims of the present application, the determining the temperature drift calibration value of the gyroscope of the inertial measurement unit in the stationary state, includes:

acquiring an angular velocity value output by the gyroscope of the inertial measurement unit in the stationary state within a first preset period;
determining an initial temperature drift value of the gyroscope of the inertial measurement unit in the stationary state based on the angular velocity value within the first preset period;
determining an initial attitude angle based on the angular velocity value within the first preset period and the initial temperature drift value; and
determining the temperature drift calibration value of the gyroscope of the inertial measurement unit in the stationary state based on the initial attitude angle.

These examples have the following advantages or beneficial effects: by determining the initial temperature drift value of the gyroscope of the inertial measurement unit in the stationary state based on the angular velocity value within the first preset period, determining the initial attitude angle based on the angular velocity value within the first preset period and the initial temperature drift value; and finally determining the temperature drift calibration value of the gyroscope of the inertial measurement unit in the stationary state based on the initial attitude angle, a technical effect of determining the temperature drift calibration value of the gyroscope in the stationary state is achieved, which lays a data foundation for subsequent determination of the temperature drift calibration value of the gyroscope at the current moment, based on the temperature drift calibration value of the gyroscope in the stationary state.

According to further examples not belonging to the subject-matter literally defined in the claims of the present application, the determining the temperature drift calibration value of the gyroscope of the inertial measurement unit in the stationary state based on the initial attitude angle, includes:

determining the initial temperature drift value as the temperature drift calibration value of the gyroscope of the inertial measurement unit in the stationary state, if the initial attitude angle is 0; and

correcting the initial temperature drift value to obtain the temperature drift calibration value of the gyroscope of the inertial measurement unit in the stationary state, if the initial attitude angle is not 0.

Embodiments of the above invention have the following advantages or beneficial effects: by comparing the initial attitude angle with o, if the initial attitude angle is o, it indicates that the determined initial temperature drift value is accurate, so the initial temperature drift value is determined as the temperature drift calibration value of the gyroscope of inertial measurement unit in the stationary state; and if the initial attitude angle is not o, it indicates that the determined initial temperature drift value is deviated, so the initial temperature drift value is corrected, and the corrected initial temperature drift value is used as the temperature drift calibration value of the gyroscope in the stationary state.

According to further examples not belonging to the subject-matter literally defined in the claims of the present application, after the determining the temperature drift calibration value of the gyroscope of the inertial measurement unit in the stationary state based on the initial attitude angle, the method further includes:

acquiring an angular velocity value output by the gyroscope of the inertial measurement unit within a second preset period, when the inertial measurement unit is in the stationary state again; and

updating the temperature drift calibration value of the gyroscope of the inertial measurement unit in the stationary state, based on the angular velocity value within the second preset period.

These examples have the following advantages or beneficial effects: by updating the temperature drift calibration value of the gyroscope in the stationary state, based on the angular velocity value output by the gyroscope within the second preset period, when the inertial measurement unit is in the stationary state again, a technical effect of updating the temperature drift calibration value of the gyroscope in the stationary state is achieved, so that the accuracy of the temperature drift calibration value of the gyroscope in the stationary state can be guaranteed even when the traveling device switches from moving and stopping for multiple times, thus ensuring the accuracy of the temperature drift calibration value of the gyroscope at the current moment.

According to some embodiments of the invention, the method may further include:
correcting output information of the inertial measurement unit, based on the temperature drift calibration value of the inertial measurement unit, and obtaining a navigation dead reckoning result, based on the corrected output information and a navigation dead reckoning algorithm.

An embodiment of the above invention has the following advantages or beneficial effects: by correcting the output information of the inertial measurement unit, based on the temperature drift calibration value of the inertial measurement unit, the embodiment realizes a technical effect of temperature drift value compensation of the inertial measurement unit; and by obtaining the navigation dead reckoning result, based on the corrected output information and the navigation dead reckoning algorithm, the accuracy and reliability of the navigation dead reckoning result are improved.

A second aspect of the invention refers to an apparatus for calibrating a temperature drift, according to claim 6, the apparatus including:

a measurement value acquisition module, configured to acquire a first measurement value and a second measurement value; the first measurement value being a measurement value of a to-be-measured quantity at a current moment determined based on an inertial measurement unit, and the second measurement value being a measurement value of the to-be-measured quantity at the current moment determined based on a global positioning system; and

a temperature drift calibration value determination module, configured to determine a temperature drift calibration value of the inertial measurement unit at the current moment based on the first measurement value and the second measurement value.

A further aspect of the invention discloses a non-transitory computer readable storage medium, according to claim 7, storing computer instructions, the computer instructions, being used to cause the computer to perform the method for calibrating a temperature drift according to any embodiment of the invention.

According to the technical solution of the embodiments of the present invention, by using the measurement value of the to-be-measured quantity at the current moment determined based on the inertial measurement unit as the first measurement value, and using the measurement value of the to-be-measured quantity at the current moment determined based on the global positioning system as the second measurement value, and finally determining the temperature drift calibration value of the inertial measurement unit at the current moment based on the first measurement value and the second measurement value, the technical effect of determining the current temperature drift calibration value of the inertial measurement unit in real time is achieved, which lays a data foundation for subsequent compensation of the temperature drift in a navigation dead reckoning algorithm, thereby improving the accuracy of a navigation result.

BRIEF DESCRIPTION OF THE DRAWINGS

The accompanying drawings are used to better understand the present solution and do not constitute a limitation to the present invention, in which:

Fig. 1 is a flowchart of a method for calibrating a temperature drift disclosed in Embodiment 1 of the present invention;
Fig. 2 is a flowchart of another method for calibrating a temperature drift disclosed in Embodiment 2 of the present invention;
Fig. 3 is a flowchart of another method for calibrating a temperature drift disclosed in Embodiment 3 of the present invention;
Fig. 4 is a flowchart of a method for calibrating a temperature drift according to an example not belonging to the subject-matter defined in the claims of the present application, but useful for the understanding thereof disclosed as Embodiment 4 of the present invention;
Fig. 5 is a schematic structural diagram of an apparatus for calibrating a temperature drift disclosed in Embodiment 5 of the present invention; and
Fig. 6 is a block diagram of an electronic device disclosed in Embodiment 6 of the present invention.

DETAILED DESCRIPTION OF EMBODIMENTS

The following describes exemplary embodiments of the present invention in conjunction with the accompanying drawings, which includes various details of the embodiments of the present invention to facilitate understanding, and they should be considered as merely exemplary. Therefore, those of ordinary skill in the art should understand that various changes and modifications may be made to the embodiments described herein without departing from the scope of the present invention. Also, for clarity and conciseness, descriptions of well-known functions and structures are omitted in the following description.

Embodiment 1

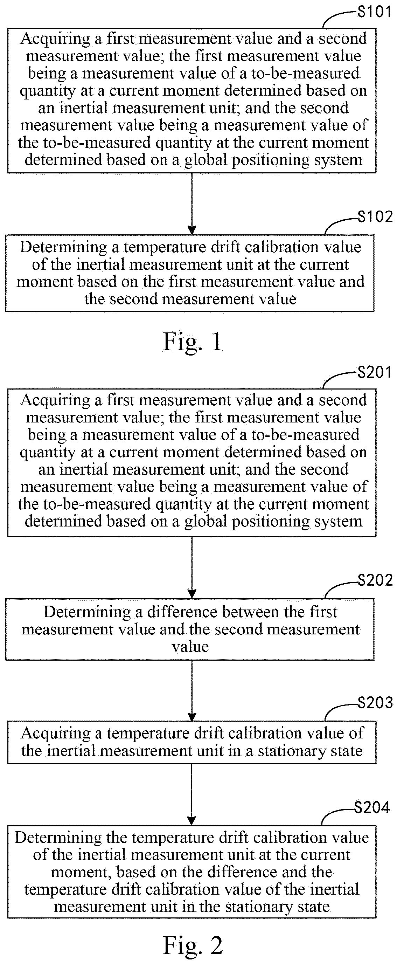

Fig. 1 is a flowchart of a method for calibrating a temperature drift disclosed in Embodiment 1 of the present invention. The present embodiment may be applied to the case that a traveling device uses an on-board navigation. The method of the present embodiment may be performed by an apparatus for calibrating a temperature drift. The apparatus may be implemented by software and/or hardware, and may be integrated on any electronic device having computing power, such as a server.

As shown in Fig. 1, the method for calibrating a temperature drift disclosed in the present embodiment may include S101 and S102.

S101 includes acquiring a first measurement value and a second measurement value; the first measurement value being a measurement value of a to-be-measured quantity at a current moment determined based on an inertial measurement unit (IMU); and the second measurement value being a measurement value of the to-be-measured quantity at the current moment determined based on a global positioning system (GPS).

Inertial measurement unit is an apparatus for measuring a three-axis attitude angle (or angular rate) and acceleration of an object. Generally, an inertial measurement unit includes three single-axis accelerometers and three single-axis gyroscopes. The accelerometers measure acceleration values of three independent axes of the object in a carrier coordinate system, while the gyroscopes detect angular velocity values of the carrier relative to a navigation coordinate system, and resolve an attitude of the object. Global positioning system is a high-precision radio navigation positioning system based on aerial satellites. The system can provide accurate geographic position, vehicle speed and attitude information anywhere in the world and near earth space. In the present embodiment, the to-be-measured quantity includes speed and/or angle, etc.

Specifically, the inertial measurement unit is built in a traveling device, and the traveling device includes but is not limited to automobile, ship and aircraft. When the traveling device is in a traveling state, the measurement value of the to-be-measured quantity determined by the inertial measurement unit is acquired in real time, for example, a speed value of the traveling device is obtained by integrating an acceleration value at the current moment by the accelerometer in the inertial measurement unit, or an attitude angle of the traveling device obtained by integrating an angular velocity at the current moment by the gyroscope in the inertial measurement unit. Meanwhile, the measurement value of the to-be-measured quantity at the current moment determined based on the global positioning system is acquired from a global positioning system built in the traveling device, such as a speed value of the traveling device at the current moment determined by the global positioning system, and an attitude angle of the traveling device at the current moment determined by the global positioning system.

According to the invention, the to-be-measured quantity is speed, the first measurement value is a first speed value, and the second measurement value is a second speed value.

According to an example not belonging to the subject-matter defined in the claims of the present application, but useful for the understanding thereof, if the to-be-measured quantity were an angle, the first measurement value would be a first attitude angle, and the second measurement value would be a second attitude angle.

By using the measurement value of the to-be-measured quantity at the current moment determined based on the inertial measurement unit as the first measurement value, and using the measurement value of the to-be-measured quantity at the current moment determined based on the global positioning system as the second measurement value, a data foundation is laid for subsequent determination of a temperature drift calibration value of the inertial measurement unit at the current moment based on the first measurement value and the second measurement value.

S102 includes determining a temperature drift calibration value of the inertial measurement unit at the current moment based on the first measurement value and the second measurement value.

The temperature drift calibration value of the inertial measurement unit at the current moment represents the temperature drift calibration value of the inertial measurement unit during traveling of the traveling device.

Specifically, a difference value between the first measurement value and the second measurement value is determined, for example, a difference between the first measurement value and the second measurement value is determined, and for another example, a ratio between the first measurement value and the second measurement value is determined. Based on the difference between the first measurement value and the second measurement value, an output value of the inertial measurement unit at the current moment, integral calculation time corresponding to the inertial measurement unit and a preset scale value, the temperature drift calibration value of the inertial measurement unit at the current moment is determined. If the to-be-measured quantity is speed, the output value of the inertial measurement unit at the current moment is acceleration, the integral calculation time corresponding to the inertial measurement unit is integral calculation time corresponding to the accelerometer, and the temperature drift calibration value of the inertial measurement unit at the current moment is a temperature drift calibration value of the accelerometer of the inertial measurement unit at the current moment; and if the to-be-measured quantity is an angle, the output value of the inertial measurement unit at the current moment is angular velocity, the integral calculation time corresponding to the inertial measurement unit is integral calculation time corresponding to the gyroscope, and the temperature drift calibration value of the inertial measurement unit at the current moment is a temperature drift calibration value of the gyroscope of the inertial measurement unit at the current moment. The preset scale value is a constant, which may be configured according to actual needs.

Alternatively, the temperature drift calibration value of the inertial measurement unit at the current moment is determined according to the formula as follows:

$$Delta\_x = ((y - bias) * delta\_time) * scale$$

Here, *Delta_x* represents the difference between the first measurement value and the second measurement value, *y* represents the output value of the inertial measurement unit at the current moment, *bias* represents the temperature drift calibration value of the inertial measurement unit at the current moment, *delta_time* represents the integral calculation time corresponding to the inertial measurement unit, and *scale* represents the preset scale value.

By determining the temperature drift calibration value of the inertial measurement unit at the current moment based on the first measurement value and the second measurement value, the technical effect of determining the temperature drift calibration value of the inertial measurement unit at the current moment in real time is achieved.

According to the technical solution of the present embodiment, by using the measurement value of the to-be-measured quantity at the current moment determined based on the inertial measurement unit as the first measurement value, and using the measurement value of the to-be-measured quantity at the current moment determined based on the global positioning system as the second measurement value, and finally determining the temperature drift calibration value of the inertial measurement unit at the current moment based on the first measurement value and the second measurement value, a technical effect of determining the current temperature drift calibration value of the inertial measurement unit in real time is achieved, which lays a data foundation for subsequent compensation of the temperature drift in a navigation dead reckoning algorithm, so as to improve the accuracy of a navigation result.

Embodiment 2

Fig. 2 is a flowchart of another method for calibrating a temperature drift disclosed in Embodiment 2 of the present invention, which is further optimized and expanded based on the above technical solution, and may be combined with the above various alternative embodiments. As shown in Fig. 2, the method may include S201 to S204.

S201 includes acquiring a first measurement value and a second measurement value; the first measurement value being a measurement value of a to-be-measured quantity at a current moment determined based on an inertial measurement unit; and the second measurement value being a measurement value of the to-be-measured quantity at the current moment determined based on a global positioning system.

Step 202 includes determining a difference between the first measurement value and the second measurement value.

According to the invention, the to-be-measured quantity is speed, the first measurement value is a first speed value, the second measurement value is a second speed value. Correspondingly, the difference between the first measurement value and the second measurement value is a difference between the first speed value and the second speed value. If, according to an example not belonging to the subject-matter defined in the claims of the present application, but useful for the understanding thereof, the to-be-measured quantity were an angle, the first measurement value would be a first attitude angle, the second measurement value would be a second attitude angle, correspondingly, the difference between the first measurement value and the second measurement value would be a difference between the first attitude angle and the second attitude angle.

S203 includes acquiring a temperature drift calibration value of the inertial measurement unit in a stationary state.

The stationary state represents a state where the speed of a traveling device is zero, which may be determined by apparatuses on the traveling device including the global positioning system or a speed measuring radar.

Specifically, an output value of the inertial measurement unit in the stationary state within a first preset period is acquired; an initial temperature drift value of the inertial measurement unit in the stationary state is determined based on the output value within the first preset period; then an initial feature value is determined based on the output value within the first preset period and the initial temperature drift value; and finally the temperature drift calibration value of the inertial measurement unit is determined in the stationary state based on the initial feature value. According to the invention, the to-be-measured quantity is speed, the output value of the inertial measurement unit within the first preset period is an acceleration value of the accelerometer within the first preset period, the initial temperature drift value of the inertial measurement unit in the stationary state is an initial temperature drift value of the accelerometer in the stationary state, the initial feature value is an initial speed value, and the temperature drift calibration value of the inertial measurement unit in the stationary state is a temperature drift calibration value of the accelerometer in the stationary state. If, according to an example not belonging to the subject-matter defined in the claims of the present application, but useful for the understanding thereof, the to-be-measured quantity were an angle, the output value of the inertial measurement unit within the first preset period would be an angular velocity value of the gyroscope within the first preset period, the initial temperature drift value of the inertial measurement unit in the stationary state would be an initial temperature drift value of the gyroscope in the stationary state, the initial feature value would be an initial attitude angle, and the temperature drift calibration value of the inertial measurement unit in the stationary state would be a temperature drift calibration value of the gyroscope in the stationary state.

Step 204 includes determining the temperature drift calibration value of the inertial measurement unit at the current moment, based on the difference and the temperature drift calibration value of the inertial measurement unit in the stationary state.

Specifically, the temperature drift calibration value of the inertial measurement unit at the current moment is determined according to the formula as follows:

$$Delta\_x = ((y - biasx - bias) * delta\_time) * scale$$

Here, $Delta\_x$ represents the difference between the first measurement value and the second measurement value, $y$ represents the output value of the inertial measurement unit at the current moment, $biasx$ represents the temperature drift calibration value of the inertial measurement unit in the stationary state, $bias$ represents the temperature drift calibration value of the inertial measurement unit at the current moment, $delta\_time$ represents the integral calculation time corresponding to the inertial measurement unit, and $scale$ represents the preset scale value. According to the invention, the to-be-measured quantity is speed, the output value of the inertial measurement unit at the current moment is acceleration, the temperature drift calibration value of the inertial measurement unit at the current moment is a temperature drift calibration value of the accelerometer at the current moment, the integral calculation time corresponding to the inertial measurement unit is integral calculation time corresponding to the accelerometer, and the temperature drift calibration value of the inertial measurement unit at the current moment is a temperature drift calibration value of the accelerometer of the inertial measurement unit at the current moment. If, according to an example not belonging to the subject-matter defined in the claims of the present application, but useful for the understanding thereof, the to-be-measured quantity were an angle, the output value of the inertial measurement unit at the current moment would be angular velocity, the temperature drift calibration value of the inertial measurement unit in the stationary state would be a temperature drift calibration value of the gyroscope in the stationary state, the integral calculation time corresponding to the inertial measurement unit would be integral calculation time corresponding to the gyroscope, and the temperature drift calibration value of the inertial measurement unit at the current moment would be a temperature drift calibration value of the gyroscope of the inertial measurement unit at the current moment. The preset scale value is a constant, which may be set according to actual needs.

In the present embodiment, the temperature drift calibration value of the inertial measurement unit at the current moment is determined based on the difference between the first measurement value and the second measurement value and the temperature drift calibration value of the inertial measurement unit in the stationary state, since calculation of the temperature drift calibration value in the stationary state is relatively accurate, the temperature drift calibration value in the stationary state is used as a calculation item, and the accuracy of the finally determined temperature drift calibration value of the inertial measurement unit at the current moment may be improved.

On the basis of foregoing embodiments, the method further includes:

correcting output information of the inertial measurement unit, based on the temperature drift calibration value of the inertial measurement unit, and obtaining a navigation dead reckoning result, based on the corrected output information and a navigation dead reckoning algorithm.

The temperature drift calibration value of the inertial measurement unit includes the temperature drift calibration value of the inertial measurement unit in the stationary state, and the temperature drift calibration value of the inertial measurement unit at the current moment, that is, no matter whether the traveling speed of the traveling device is o or not, the output information of the inertial measurement unit is corrected in real time, and the navigation dead reckoning result is obtained based on the corrected output information and the navigation dead reckoning algorithm.

By correcting the output information of the inertial measurement unit based on the temperature drift calibration value of the inertial measurement unit, a technical effect of temperature drift compensation of the inertial measurement unit is achieved; and by obtaining the navigation dead reckoning result, based on the corrected output information and the navigation dead reckoning algorithm, the accuracy and reliability of the navigation dead reckoning result are improved.

Embodiment 3

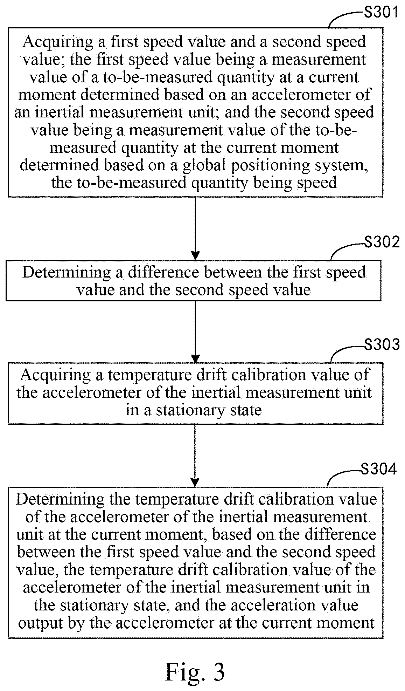

Fig. 3 is a flowchart of another method for calibrating a temperature drift disclosed in Embodiment 3 of the present invention, which is further optimized and expanded based on the above technical solution, and may be combined with the above various alternative embodiments. As shown in Fig. 3, the method may include S301 to S304.

S301 includes acquiring a first speed value and a second speed value; the first speed value being a measurement value of a to-be-measured quantity at a current moment determined based on an accelerometer of an inertial measurement unit; and the second speed value being a measurement value of the to-be-measured quantity at the current moment determined based on a global positioning system, the to-be-measured quantity being speed.

S302 includes determining a difference between the first speed value and the second speed value.

S303 includes acquiring a temperature drift calibration value of the accelerometer of the inertial measurement unit in a stationary state.

According to the invention, S303 includes steps 1) to 4).

Step 1) includes acquiring an acceleration value output by the accelerometer of the inertial measurement unit in the stationary state within a first preset period.

Here, the first preset period may be arbitrarily set according to requirements, and the preferred first preset period is 1 minute.

Step 2) includes determining an initial temperature drift value of the accelerometer of the inertial measurement unit in the stationary state based on the acceleration value within the first preset period.

According to the invention, the acceleration values within the first preset period are divided into segments, and an average value corresponding to each segment is calculated, and the median of the average values is used as the initial temperature drift value of the accelerometer of the inertial measurement unit in the stationary state.

For example, assuming that the first preset period is 1 minute, for acceleration values output by the accelerometer of the inertial measurement unit within 1 minute, an average value of acceleration values for every 100 milliseconds is acquired, that is, 600 average values are acquired, and the median of these 600 average values is used as the initial temperature drift value of the accelerometer of the inertial measurement unit in the stationary state.

Step 3) includes determining an initial speed value based on the acceleration value within the first preset period and the initial temperature drift value.

Specifically, the initial temperature drift value is subtracted from the acceleration value at each moment within the first preset period respectively, and integration calculation is performed on subtraction results to obtain the initial speed value within the first preset period. The specific period of each moment may be set arbitrarily according to requirements, and alternatively includes 1 millisecond or 10 milliseconds.

Step 4) includes determining the temperature drift calibration value of the accelerometer of the inertial measurement unit in the stationary state based on the initial speed value.

Alternatively, if the initial speed value is 0, the initial temperature drift value is determined as the temperature drift calibration value of the accelerometer of the inertial measurement unit in the stationary state; and if the initial speed value is not 0, the initial temperature drift value is corrected to obtain the temperature drift calibration value of the accelerometer of the inertial measurement unit in the stationary state.

Here, if the initial speed value is 0, it indicates that the determined initial temperature drift value is accurate, accordingly, the initial temperature drift value is determined as the temperature drift calibration value of the accelerometer of inertial measurement unit in the stationary state. If the initial speed value is not 0, it indicates that the determined initial temperature drift value is deviated, then the initial temperature drift value is corrected. The correction process includes: subtracting a ratio of the initial speed value to the first preset period from the initial temperature drift value, to acquire a calculation result as the corrected initial temperature drift value. For example, the initial temperature drift value

$$1m/s^2 - \frac{0.5m/s}{1\min}$$

is $1m/s^2$ , the initial speed value is 0.5m/s, the first preset period is 1 min, and a calculation result of is used as the corrected initial temperature drift value. Finally, the corrected initial temperature drift value is used as the temperature drift calibration value of the accelerometer of the inertial measurement unit in the stationary state.

S304 includes determining the temperature drift calibration value of the accelerometer of the inertial measurement unit at the current moment, based on the difference between the first speed value and the second speed value, the temperature drift calibration value of the accelerometer of the inertial measurement unit in the stationary state, and the acceleration value output by the accelerometer at the current moment.

Alternatively, the temperature drift calibration value of the accelerometer of the inertial measurement unit at the current moment is determined according to the formula as follows:

$$Delta\_v = ((a - bias0 - bias1) * delta\_time1) * scale1$$

Here, $Delta\_v$ is the difference between the first speed value and the second speed value, $a$ is the acceleration value output by the accelerometer at the current moment, $bias0$ is the temperature drift calibration value of the accelerometer of the inertial measurement unit in the stationary state, $delta\_time$ is the integral calculation time corresponding to the accelerometer of the inertial measurement unit, which is about 2s, and $scale$ is the preset scale value, preferably taking a value between 1-2.

According to the technical solution of the present embodiment, by acquiring the first speed value and the second speed value, determining the difference between the first speed value and the second speed value, and acquiring the temperature drift calibration value of the accelerometer of the inertial measurement unit in the stationary state and finally determining the temperature drift calibration value of the accelerometer of the inertial measurement unit at the current moment, based on the difference between the first speed value and the second speed value, the temperature drift calibration value of the accelerometer of the inertial measurement unit in the stationary state, and the acceleration value output by the accelerometer at the current moment, a technical effect of determining the current temperature drift calibration value of the accelerometer of the inertial measurement unit in real time is achieved, which lays a data foundation for subsequent compensation of the accelerometer temperature drift in a navigation dead reckoning algorithm, thereby improving the accuracy of a navigation result.

On the basis of foregoing embodiments, after the "determining the temperature drift calibration value of the accelerometer of the inertial measurement unit in the stationary state based on the initial speed value", the method further includes steps A and B.

Step A includes: acquiring an acceleration value output by the accelerometer of the inertial measurement unit within a second preset period, when the inertial measurement unit is in the stationary state again.

The second preset period may be configured according to requirements, and is preferably 30s.

Specifically, when the traveling speed of the traveling device is 0 again, the acceleration value output by the accelerometer of the inertial measurement unit within the second preset period is acquired.

Step B includes updating the temperature drift calibration value of the accelerometer of the inertial measurement unit in the stationary state, based on the acceleration value within the second preset period.

Specifically, for the acceleration values within the second preset period, acceleration values within a preset error range of the previous temperature drift calibration value of the accelerometer of the inertial measurement unit in the stationary state are used as target acceleration values, and an average value of the target acceleration values is used as the updated temperature drift calibration value of the accelerometer of the inertial measurement unit in the stationary state. The preset error range is preferably 30%-50%. The influence of noise on the temperature drift calibration value may be avoided by setting the preset error range.

By updating the temperature drift calibration value of the accelerometer in the stationary state, based on the acceleration values output by the accelerometer within the second preset period, when the inertial measurement unit is in the stationary state again, a technical effect of updating the temperature drift calibration value of the accelerometer in the stationary state is achieved, so that the accuracy of the temperature drift calibration value of the accelerometer in the stationary state can be guaranteed even when the traveling device switches from moving and stopping for multiple times, thus ensuring the accuracy of the temperature drift calibration value of the accelerometer at the current moment.

On the basis of foregoing embodiments, the acceleration value output by the accelerometer of the inertial measurement unit is an acceleration value output by a sensitive axis of the accelerometer; correspondingly, the temperature drift calibration value of the accelerometer of the inertial measurement unit in the stationary state is the temperature drift calibration value of the sensitive axis of the accelerometer of the inertial measurement unit in the stationary state.

Specifically, integrations are performed on the accelerations output by the three axes in the accelerometer to obtain speed values, which are respectively compared with the speed value determined by the global positioning system, and an axis corresponding to the speed value having the minimum error is used as the sensitive axis of the accelerometer.

By using the acceleration value output by the sensitive axis of the accelerometer as the acceleration value output by the accelerometer of the inertial measurement unit, on the premise of saving a follow-up method workload, it is ensured that the finally obtained result of the temperature drift calibration value of the inertial measurement unit at the current moment is more accurate.

Embodiment 4

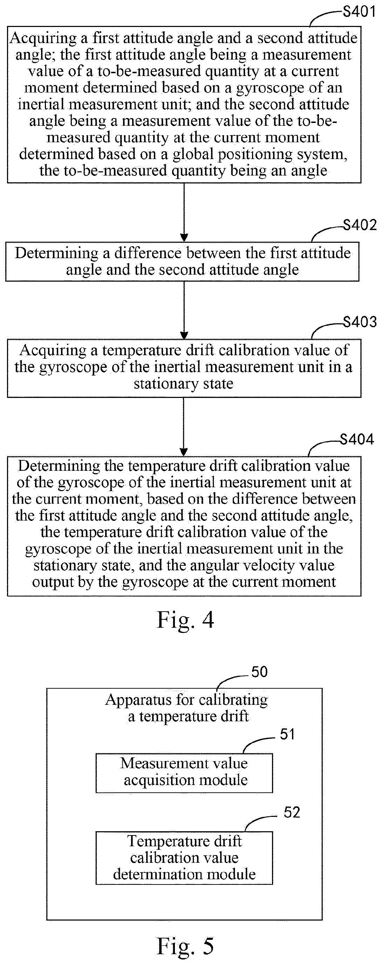

Fig. 4 is a flowchart of another method for calibrating a temperature drift according to an example not belonging to the subject-matter defined in the claims of the present application, but useful for the understanding thereof disclosed as Embodiment 4. As shown in Fig. 4, the method may include S401 to S403.

S401 includes acquiring a first attitude angle and a second attitude angle; the first attitude angle being a measurement value of a to-be-measured quantity at a current moment determined based on a gyroscope of an inertial measurement unit; and the second attitude angle being a measurement value of the to-be-measured quantity at the current moment determined based on a global positioning system, the to-be-measured quantity being an angle.

S402 includes determining a difference between the first attitude angle and the second attitude angle.

S403 includes acquiring a temperature drift calibration value of the gyroscope of the inertial measurement unit in a stationary state.

Alternatively, S403 includes steps 1) to 4).

Step 1) includes acquiring an angular velocity value output by the gyroscope of the inertial measurement unit in the stationary state within a first preset period.

Here, the first preset period may be arbitrarily set according to requirements, and the preferred first preset period is 1 minute.

Step 2) includes determining an initial temperature drift value of the gyroscope of the inertial measurement unit in the stationary state based on the angular velocity value within the first preset period.

Specifically, the angular velocity values within the first preset period are divided into segments, and an average value corresponding to each segment is calculated, and the median of the average values is used as the initial temperature drift value of the gyroscope of the inertial measurement unit in the stationary state.

For example, assuming that the first preset period is 1 minute, for angular velocity values output by the gyroscope of the inertial measurement unit within 1 minute, an average value of angular velocity values for every 100 milliseconds is acquired, that is, 600 average values are acquired, and the median of these 600 average values is used as the initial temperature drift value of the gyroscope of the inertial measurement unit in the stationary state.

Step 3) includes determining an initial attitude angle based on the angular velocity value within the first preset period and the initial temperature drift value.

Specifically, the initial temperature drift value is subtracted from the angular velocity value at each moment within the first preset period respectively, and integration calculation is performed on subtraction results to obtain the initial attitude angle within the first preset period. The specific period of each moment may be set arbitrarily according to requirements, and alternatively includes 1 millisecond or 10 milliseconds.

Step 4) includes determining the temperature drift calibration value of the gyroscope of the inertial measurement unit in the stationary state based on the initial attitude angle.

Alternatively, if the initial attitude angle is 0, the initial temperature drift value is determined as the temperature drift calibration value of the gyroscope of the inertial measurement unit in the stationary state; and if the initial attitude angle is not o, the initial temperature drift value is corrected to obtain the temperature drift calibration value of the gyroscope of the inertial measurement unit in the stationary state.

Here, if the initial attitude angle is 0, it indicates that the determined initial temperature drift value is accurate, accordingly, the initial temperature drift value is determined as the temperature drift calibration value of the gyroscope of inertial measurement unit in the stationary state. If the initial speed value is not 0, it indicates that the determined initial temperature drift value is deviated, and the initial temperature drift value is corrected. The correction process includes: subtracting a ratio of the initial attitude angle to the first preset period from the initial temperature drift value to acquire a calculation result as the corrected initial temperature drift value. For example, the initial temperature drift value is 1rad/s, the initial attitude angle is 0.5rad, the first preset period is 1 min, and a calculation result of $1rad/s - \dfrac{0.5rad}{1\min}$
is used as the corrected initial temperature drift value. Finally, the corrected initial temperature drift value is used as the temperature drift calibration value of the gyroscope of the inertial measurement unit in the stationary state.

S404 includes determining the temperature drift calibration value of the gyroscope of the inertial measurement unit at the current moment, based on the difference between the first attitude angle and the second attitude angle, the temperature drift calibration value of the gyroscope of the inertial measurement unit in the stationary state, and the angular velocity value output by the gyroscope at the current moment.

Alternatively, the temperature drift calibration value of the gyroscope of the inertial measurement unit at the current moment is determined according to the formula as follows:

$$Delta\_yaw = ((g - bias2 - bias3) * delta\_time2) * scale2$$

Here, *Delta_yaw* is the difference between the first attitude angle and the second attitude angle, *g* is the angular velocity value output by the gyroscope at the current moment, *bias2* is the temperature drift calibration value of the gyroscope of the inertial measurement unit in the stationary state, *delta_time*2 is the integral calculation time corresponding to the gyroscope of the inertial measurement unit, which is about 20s, and *scale*2 is the preset scale value, preferably taking a value between 1-2.

According to the technical solution of the present example, by acquiring the first attitude angle and the second attitude angle, determining the difference between the first attitude angle and the second attitude angle, acquiring the temperature drift calibration value of the gyroscope of the inertial measurement unit in the stationary state, and finally determining the temperature drift calibration value of the gyroscope of the inertial measurement unit at the current moment, based on the difference between the first attitude angle and the second attitude angle, the temperature drift calibration value of the gyroscope of the inertial measurement unit in the stationary state, and the angular velocity value output by the gyroscope at the current moment, a technical effect of determining the current temperature drift calibration value of the gyroscope of the inertial measurement unit in real time is achieved, which lays a data foundation for subsequent compensation of the gyroscope temperature drift in a navigation dead reckoning algorithm, such that the accuracy of a navigation result is improved.

On the basis of foregoing examples, after the "determining the temperature drift calibration value of the gyroscope of the inertial measurement unit in the stationary state based on the initial attitude angle", the method further includes steps A and B.

Step A includes: acquiring an angular velocity value output by the gyroscope of the inertial measurement unit within a second preset period, when the inertial measurement unit is in the stationary state again.

The second preset period may be configured according to requirements, and is preferably 30s.

Specifically, when the traveling speed of the traveling device is o again, the angular velocity value output by the gyroscope of the inertial measurement unit within a second preset period is acquired.

Step B includes updating the temperature drift calibration value of the gyroscope of the inertial measurement unit in the stationary state, based on the angular velocity value within the second preset period.

Specifically, for the angular velocity values within the second preset period, angular velocity values within a preset error range of the previous temperature drift calibration value of the gyroscope of the inertial measurement unit in the stationary state are used as target angular velocity values, and an average value of the target angular velocity values is used as the updated temperature drift calibration value of the gyroscope of the inertial measurement unit in the stationary state. The preset error range is preferably 30%-50%. The influence of noise on the temperature drift calibration value may be avoided by setting the preset error range.

By updating the temperature drift calibration value of the gyroscope in the stationary state, based on the angular velocity values output by the gyroscope within the second preset period, when the inertial measurement unit is in the stationary state again, a technical effect of updating the temperature drift calibration value of the gyroscope in the stationary state is achieved, so that the accuracy of the temperature drift calibration value of the gyroscope in the stationary state can be guaranteed even when the traveling device switches from moving and stopping for multiple times, thus ensuring the accuracy of the temperature drift calibration value of the gyroscope at the current moment.

On the basis of foregoing examples, the angular velocity value output by the gyroscope of the inertial measurement unit is an angular velocity value output by an earth facing axis of the gyroscope.

Correspondingly, the temperature drift calibration value of the gyroscope of the inertial measurement unit in the stationary state is a temperature drift calibration value of the earth facing axis of the gyroscope of the inertial measurement unit in the stationary state.

Specifically, the rotation axis in the gyroscope is used as the earth facing axis.

On the basis of the foregoing example, the method further includes:
performing fitting based on the attitude angle determined by the global positioning system, every set period, or every set distance that vehicle travels.

Specifically, the attitude angle determined by the global positioning system fluctuates greatly due to various factors. In this case, the attitude angle determined by the global positioning system can not be directly used. Therefore, Bessel fitting is performed on the attitude angle determined by the global positioning system every set time, such as 1min, or every set distance that vehicle travels, such as 150 meters. In order to ensure the continuity of the fitting, the fitting is performing using 125 meter position of the last 150 meters as the starting point, using 50 meter position of the current 150 meters as the midpoint, and using 125 meter position of the current segment as the end point

Embodiment 5

Fig. 5 is a schematic structural diagram of an apparatus 50 for calibrating a temperature drift provided in Embodiment 5 of the present invention, which may perform a method for calibrating a temperature drift provided in any embodiment of the present invention, and has corresponding functional modules and beneficial effects for performing the method. As shown in Fig. 5, the apparatus may include:

a measurement value acquisition module 51, configured to acquire a first measurement value and a second measurement value; the first measurement value being a measurement value of a to-be-measured quantity at a current moment determined based on an inertial measurement unit; and the second measurement value being a measurement value of the to-be-measured quantity at the current moment determined based on a global positioning system; and

a temperature drift calibration value determination module 52, configured to determine a temperature drift calibration value of the inertial measurement unit at the current moment based on the first measurement value and the second measurement value.

On the basis of foregoing embodiments, the temperature drift calibration value determination module 52 is specifically configured to:

determine a difference between the first measurement value and the second measurement value;

acquire a temperature drift calibration value of the inertial measurement unit in a stationary state; and

determine the temperature drift calibration value of the inertial measurement unit at the current moment, based on the difference and the temperature drift calibration value of the inertial measurement unit in the stationary state.

According to the invention, the to-be-measured quantity is speed, the first measurement value is a first speed value, the second measurement value is a second speed value, and the temperature drift calibration value of the inertial measurement unit in the stationary state is a temperature drift calibration value of an accelerometer of the inertial measurement unit in the stationary state;

correspondingly, the temperature drift calibration value determination module 52 is further specifically configured to:

determine a temperature drift calibration value of the accelerometer of the inertial measurement unit at the current moment, based on a difference between the first speed value and the second speed value, the temperature drift calibration value of the accelerometer of the inertial measurement unit in the stationary state, and an acceleration value output by the accelerometer at the current moment.

On the basis of foregoing embodiments, the temperature drift calibration value determination module 52 is further specifically configured to:

determine the temperature drift calibration value *bias*1 of the accelerometer of the inertial measurement unit at the current moment according to the formula as follows:

$$Delta\_v = ((a - bias0 - bias1) * delta\_time1) * scale1$$
;

here, *Delta_v* is the difference between the first speed value and the second speed value, *a* is the acceleration value output by the accelerometer at the current moment, *bias*0 is the temperature drift calibration value of the accelerometer of the inertial measurement unit in the stationary state, *delta_time*1 is integral calculation time corresponding to the accelerometer of the inertial measurement unit, and *scale*1 is a preset scale value.

According to the invention, the temperature drift calibration value determination module 52 is further specifically configured to:

acquire an acceleration value output by the accelerometer of the inertial measurement unit in the stationary state within a first preset period;

determine an initial temperature drift value of the accelerometer of the inertial measurement unit in the stationary state based on the acceleration value within the first preset period;

determine an initial speed value based on the acceleration value within the first preset period and the initial temperature drift value; and

determine the temperature drift calibration value of the accelerometer of the inertial measurement unit in the stationary state based on the initial speed value.

On the basis of foregoing embodiments, the temperature drift calibration value determination module 52 is further specifically configured to:

determine the initial temperature drift value as the temperature drift calibration value of the accelerometer of the inertial measurement unit in the stationary state, if the initial speed value is o; and

correct the initial temperature drift value to obtain the temperature drift calibration value of the accelerometer of the inertial measurement unit in the stationary state, if the initial speed value is not o.

On the basis of foregoing embodiments, the apparatus further includes a first temperature drift calibration value update module, which is specifically configured to:

acquire an acceleration value output by the accelerometer of the inertial measurement unit within a second preset period, when the inertial measurement unit is in the stationary state again; and

update the temperature drift calibration value of the accelerometer of the inertial measurement unit in the stationary state, based on the acceleration value within the second preset period.

According to an example not belonging to the subject-matter defined in the claims of the present application, but useful for the understanding thereof, the to-be-measured quantity is an angle, the first measurement value is a first attitude angle, the second measurement value is a second attitude angle, and the temperature drift calibration value of the inertial measurement unit in the stationary state is a temperature drift calibration value of a gyroscope of the inertial measurement unit in the stationary state;

correspondingly, the temperature drift calibration value determination module 52 is further specifically configured to:

determine a temperature drift calibration value of the gyroscope of the inertial measurement unit at the current moment, based on a difference between the first attitude angle and the second attitude angle, the temperature drift calibration value of the gyroscope of the inertial measurement unit in the stationary state, and an angular velocity value output by the gyroscope at the current moment.

On the basis of foregoing example, the temperature drift calibration value determination module 52 is further specifically configured to:

determine the temperature drift calibration value *bias*3 of the gyroscope of the inertial measurement unit at the current moment according to the formula as follows:

$$Delta\_yaw = ((g - bias2 - bias3) * delta\_time2) * scale2$$

here, *Delta_yaw* is the difference between the first attitude angle and the second attitude angle, *g* is the angular velocity value output by the gyroscope at the current moment, *bias*2 is the temperature drift calibration value of the gyroscope of the inertial measurement unit in the stationary state, *delta_time*2 is integral calculation time corresponding to the gyroscope of the inertial measurement unit, and *scale*2 is a preset scale value.

On the basis of foregoing examples, the temperature drift calibration value determination module 52 is further specifically configured to:

acquire an angular velocity value output by the gyroscope of the inertial measurement unit within a first preset period in the stationary state;
determine an initial temperature drift value of the gyroscope of the inertial measurement unit in the stationary state based on the angular velocity value within the first preset period;
determine an initial attitude angle based on the angular velocity value within the first preset period and the initial temperature drift value; and
determine the temperature drift calibration value of the gyroscope of the inertial measurement unit in the stationary state based on the initial attitude angle.

On the basis of foregoing examples, the temperature drift calibration value determination module 52 is further specifically configured to:

determine the initial temperature drift value as the temperature drift calibration value of the gyroscope of the inertial measurement unit in the stationary state, if the initial attitude angle is 0; and
correct the initial temperature drift value to obtain the temperature drift calibration value of the gyroscope of the inertial measurement unit in the stationary state, if the initial attitude angle is not 0.

On the basis of foregoing examples, the apparatus further includes a second temperature drift calibration value update module, which is specifically configured to:

acquire an angular velocity value output by the gyroscope of the inertial measurement unit within a second preset period, when the inertial measurement unit is in the stationary state again; and
update the temperature drift calibration value of the gyroscope of the inertial measurement unit in the stationary state, based on the angular velocity value within the second preset period.

On the basis of foregoing embodiments, the apparatus further includes a navigation result acquisition module, which is specifically configured to:
correct output information of the inertial measurement unit, based on the temperature drift calibration value of the inertial measurement unit, and obtain a navigation dead reckoning result, based on the corrected output information and a navigation dead reckoning algorithm.
The apparatus 50 for calibrating a temperature drift provided in the embodiment of the present invention, may implement the method for calibrating a temperature drift provided in any embodiment of the present invention, and has the corresponding functional modules and beneficial effects for performing the method. For technical details not described in detail in the present embodiment, reference may be made to a method for calibrating a temperature drift provided by any embodiment of the present invention.
According to an embodiment of the present invention, the present invention further provides an electronic device and a readable storage medium.

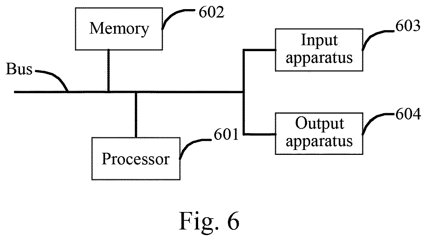

As shown in Fig. 6, is a block diagram of an electronic device of the method for calibrating a temperature drift according to an embodiment of the present invention. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present invention described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and each device provides some necessary operations (for example, a server array, a set of blade servers, or a multi-processor system). In Fig. 6, processor 601 is used as an example.

The memory 602 is a non-transitory computer readable storage medium provided by the present invention. The memory stores instructions executable by at least one processor, so that the at least one processor performs the method for calibrating a temperature drift provided by the present invention. The non-transitory computer readable storage medium of the present invention stores computer instructions for causing a computer to perform the method for calibrating a temperature drift provided by the present invention.

The memory 602, as a non-transitory computer readable storage medium, may be used to store non-transitory software programs, non-transitory computer executable programs and modules, such as program instructions/modules corresponding to the method for calibrating a temperature drift in the embodiments of the present invention (for example, the measurement value acquisition module 51 and the temperature drift calibration value determination module 52 as shown in Fig. 5). The processor 601 executes the non-transitory software programs, instructions, and modules stored in the memory 602 to execute various functional applications and data processing of the server, that is, to implement the method for calibrating a temperature drift in the foregoing method embodiments.

The memory 602 may include a storage program area and a storage data area, where the storage program area may store an operating system and application program need by at least one function; and the storage data area may store data created by the use of the electronic device for calibrating a temperature drift. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely disposed with respect to the processor 601, and these remote memories may be connected to the electronic device for calibrating a temperature drift through a network. Examples of the above network include but are not limited to the Internet, blockchain network, intranet, local area network, mobile communication network, and combinations thereof.

The electronic device of the method for calibrating a temperature drift may further include: an input apparatus 603 and an output apparatus 604. The processor 601, the memory 602, the input apparatus 603, and the output apparatus 604 may be connected through a bus or in other methods. In Fig. 6, connection through the bus is used as an example.

The input apparatus 603 may receive input digital or character information, and generate key signal inputs related to user settings and function control of the electronic device for calibrating a temperature drift, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input device, and at least one output device, and transmit the data and instructions to the storage system, the at least one input device and the at least one output device.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display device for displaying information to the user (for example, CRT (cathode ray tube) or LCD (liquid crystal display) monitor); and a keyboard and a pointing device (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

According to the technical solution of the embodiments of the present invention, by using the measurement value of the to-be-measured quantity at the current moment determined based on the inertial measurement unit as the first measurement value, and using the measurement value of the to-be-measured quantity at the current moment determined b based on the global positioning system as the second measurement value, and finally determining the temperature drift calibration value of the inertial measurement unit at the current moment based on the first measurement value and the second measurement value, a technical effect of determining the current temperature drift calibration value of the inertial measurement unit in real time is achieved, which lays a data foundation for subsequent compensation of the temperature drift in a navigation dead reckoning algorithm, so as to improve the accuracy of a navigation result.

**Claims**

1. A method for calibrating a temperature drift of an inertial measurement unit built in a travelling device, the method comprising:

   acquiring (S101) a first speed value and a second speed value, the first speed value being a speed value of a speed at a current moment determined based on the inertial measurement unit, and the second speed value being a measurement value of the speed at the current moment determined based on a global positioning system built in the travelling device; and determining (S102) a temperature drift calibration value of the inertial measurement unit at the current moment based on the first speed value and the second speed value;
   wherein the determining a temperature drift calibration value of the inertial measurement unit at the current moment based on the first speed value and the second speed value, comprises:

      determining (s202) a difference between the first speed value and the second speed value;
      acquiring (S203, S303) a temperature drift calibration value of an accelerometer of the inertial measurement unit in a stationary state comprising:

         acquiring acceleration values output by the accelerometer of the inertial measurement unit in the stationary state within a first preset period;
         determining an initial temperature drift value of the accelerometer of the inertial measurement unit in the stationary state based on the acceleration values within the first preset period, wherein the acceleration values within the first preset period are divided into segments, and an average value corresponding to each segment is calculated, and the median of the average values is used as the initial temperature drift value of the accelerometer of the inertial measurement unit in the stationary state;
determining an initial speed value based on the acceleration values within the first preset period and the initial temperature drift value; and
determining the temperature drift calibration value of the accelerometer of the inertial measurement unit in the stationary state based on the initial speed value;

wherein the method further comprises:
determining (S204, S304) the temperature drift calibration value of the inertial measurement unit at the current moment, based on the difference between the first speed value and the second speed value, the temperature drift calibration value of the accelerometer of the inertial measurement unit in the stationary state, and an acceleration value output by the accelerometer at the current moment.

2. The method according to claim 1, wherein the determining a temperature drift calibration value of the accelerometer of the inertial measurement unit at the current moment, based on a difference between the first speed value and the second speed value, the temperature drift calibration value of the accelerometer of the inertial measurement unit in the stationary state, and an acceleration value output by the accelerometer at the current moment, comprises:
determining the temperature drift calibration value *bias*1 of the accelerometer of the inertial measurement unit at the current moment according to a formula as follows:

$$Delta\_v = ((a - bias0 - bias1) * delta\_time1) * scale1$$ :

wherein, *Delta_v* is the difference between the first speed value and the second speed value, *a* is the acceleration value output by the accelerometer at the current moment, *bias*0 is the temperature drift calibration value of the accelerometer of the inertial measurement unit in the stationary state, *delta_time*1 is an integral calculation time corresponding to the accelerometer of the inertial measurement unit, and *scale*1 is a preset scale value.

3. The method according to claim 1 or 2, wherein the determining the temperature drift calibration value of the accelerometer of the inertial measurement unit in the stationary state based on the initial speed value, comprises:

determining the initial temperature drift value as the temperature drift calibration value of the accelerometer of the inertial measurement unit in the stationary state, if the initial speed value is 0; and
correcting the initial temperature drift value to obtain the temperature drift calibration value of the accelerometer of the inertial measurement unit in the stationary state, if the initial speed value is not 0.

4. The method according to any of claims 1 to 3, wherein, after the determining the temperature drift calibration value of the accelerometer of the inertial measurement unit in the stationary state based on the initial speed value, the method further comprises:

acquiring an acceleration value output by the accelerometer of the inertial measurement unit within a second preset period, when the inertial measurement unit is in the stationary state again; and
updating the temperature drift calibration value of the accelerometer of the inertial measurement unit in the stationary state, based on the acceleration value within the second preset period.

5. The method according to any one of claims 1-4, wherein the method further comprises:
correcting output information of the inertial measurement unit, based on the temperature drift calibration value of the inertial measurement unit, and obtaining a navigation dead reckoning result, based on the corrected output information and a navigation dead reckoning algorithm.

6. An apparatus for calibrating a temperature drift, the apparatus comprising: a measurement value acquisition module (51) and a temperature drift calibration value determination module (52), configured to implement the method according to any one of claims 1 to 5.

7. A non-transitory computer readable storage medium, storing computer instructions, the computer instructions being executable to cause a computer to perform the method for calibrating a temperature drift according to any one of claims 1-5.

**Patentansprüche**

1. Verfahren zum Kalibrieren einer Temperaturdrift einer Trägheitsmesseinheit, die in einer Fahrvorrichtung eingebaut ist, wobei das Verfahren Folgendes umfasst:

    Erfassen (S101) eines ersten Geschwindigkeitswerts und eines zweiten Geschwindigkeitswerts, wobei der erste Geschwindigkeitswert ein Geschwindigkeitswert einer Geschwindigkeit zu einem aktuellen Zeitpunkt ist, der basierend auf der Trägheitsmesseinheit bestimmt wird, und der zweite Geschwindigkeitswert ein Messwert der Geschwindigkeit zu dem aktuellen Zeitpunkt ist, der basierend auf einem globalen Positionierungssystem bestimmt wird, das in der Fahrvorrichtung eingebaut ist; und
    Bestimmen (S102) eines Temperaturdriftkalibrierungswerts der Trägheitsmesseinheit zu dem aktuellen Zeitpunkt basierend auf dem ersten Geschwindigkeitswert und dem zweiten Geschwindigkeitswert;
    wobei das Bestimmen eines Temperaturdriftkalibrierungswerts der Trägheitsmesseinheit zu dem aktuellen Zeitpunkt basierend auf dem ersten Geschwindigkeitswert und dem zweiten Geschwindigkeitswert Folgendes umfasst:

        Bestimmen (S202) einer Differenz zwischen dem ersten Geschwindigkeitswert und dem zweiten Geschwindigkeitswert;
        Erfassen (S203, S303) eines Temperaturdriftkalibrierungswerts eines Beschleunigungsmessers der Trägheitsmesseinheit in einem stationären Zustand, umfassend:

            Erfassen von Beschleunigungswerten, die durch den Beschleunigungsmesser der Trägheitsmesseinheit in dem stationären Zustand innerhalb einer ersten voreingestellten Periode ausgegeben werden;
            Bestimmen eines anfänglichen Temperaturdriftwerts des Beschleunigungsmessers der Trägheitsmesseinheit in dem stationären Zustand basierend auf den Beschleunigungswerten innerhalb der ersten voreingestellten Periode, wobei die Beschleunigungswerte innerhalb der ersten voreingestellten Periode in Segmente unterteilt werden und ein Mittelwert, der jedem Segment entspricht, berechnet wird und der Median der Mittelwerte als der anfängliche Temperaturdriftwert des Beschleunigungsmessers der Trägheitsmesseinheit in dem stationären Zustand verwendet wird;
            Bestimmen eines anfänglichen Geschwindigkeitswerts basierend auf dem Beschleunigungswert innerhalb der ersten voreingestellten Periode und dem anfänglichen Temperaturdriftwert; und
            Bestimmen des Temperaturdriftkalibrierungswerts des Beschleunigungsmessers der Trägheitsmesseinheit in dem stationären Zustand basierend auf dem anfänglichen Geschwindigkeitswert;

    wobei das Verfahren ferner Folgendes umfasst:
    Bestimmen (S204, S304) des Temperaturdriftkalibrierungswerts der Trägheitsmesseinheit zu dem aktuellen Zeitpunkt basierend auf der Differenz zwischen dem ersten Geschwindigkeitswert und dem zweiten Geschwindigkeitswert, dem Temperaturdriftkalibrierungswert des Beschleunigungsmessers der Trägheitsmesseinheit in dem stationären Zustand und einem Beschleunigungswert, der durch den Beschleunigungsmesser zu dem aktuellen Zeitpunkt ausgegeben wird.

2. Verfahren nach Anspruch 1, wobei das Bestimmen eines Temperaturdriftkalibrierungswerts des Beschleunigungsmessers der Trägheitsmesseinheit zu dem aktuellen Zeitpunkt basierend auf einer Differenz zwischen dem ersten Geschwindigkeitswert und dem zweiten Geschwindigkeitswert, dem Temperaturdriftkalibrierungswert des Beschleunigungsmessers der Trägheitsmesseinheit in dem stationären Zustand und einem Beschleunigungswert, der durch den Beschleunigungsmesser zu dem aktuellen Zeitpunkt ausgegeben wird, Folgendes umfasst:
    Bestimmen des Temperaturdriftkalibrierungswerts *bias*1 des Beschleunigungsmessers der Trägheitsmesseinheit zu dem aktuellen Zeitpunkt gemäß einer Formel wie folgt:

$$Delta\_v = ((a - bias0 - bias1) * delta\_time1) * scale1.$$

    wobei *Delta_v* die Differenz zwischen dem ersten Geschwindigkeitswert und dem zweiten Geschwindigkeitswert ist, *a* der Beschleunigungswert ist, der durch den Beschleunigungsmesser zu dem aktuellen Zeitpunkt ausgegeben wird, *bias*0 der Temperaturdriftkalibrierungswert des Beschleunigungsmessers der Trägheitsmesseinheit in dem stationären Zustand ist, *delta_time*1 eine integrale Berechnungszeit ist, die dem Beschleunigungsmesser der Trägheitsmesseinheit entspricht, und *scale*1 ein voreingestellter Skalenwert ist.

3. Verfahren nach Anspruch 1 oder 2, wobei das Bestimmen des Temperaturdriftkalibrierungswerts des Beschleunigungsmessers der Trägheitsmesseinheit in dem stationären Zustand basierend auf dem anfänglichen Geschwindigkeitswert Folgendes umfasst:

Bestimmen des anfänglichen Temperaturdriftwerts als den Temperaturdriftkalibrierungswert des Beschleunigungsmessers der Trägheitsmesseinheit in dem stationären Zustand, wenn der anfängliche Geschwindigkeitswert o ist; und
Korrigieren des anfänglichen Temperaturdriftwerts, um den Temperaturdriftkalibrierungswert des Beschleunigungsmessers der Trägheitsmesseinheit in dem stationären Zustand zu erhalten, wenn der anfängliche Geschwindigkeitswert nicht o ist.

4. Verfahren nach einem der Ansprüche 1 bis 3, wobei das Verfahren nach dem Bestimmen des Temperaturdriftkalibrierungswerts des Beschleunigungsmessers der Trägheitsmesseinheit in dem stationären Zustand basierend auf dem anfänglichen Geschwindigkeitswert ferner Folgendes umfasst:

Erfassen eines Beschleunigungswerts, der durch den Beschleunigungsmesser der Trägheitsmesseinheit innerhalb einer zweiten voreingestellten Periode ausgegeben wird, wenn sich die Trägheitsmesseinheit wieder in dem stationären Zustand befindet; und
Aktualisieren des Temperaturdriftkalibrierungswerts des Beschleunigungsmessers der Trägheitsmesseinheit in dem stationären Zustand basierend auf dem Beschleunigungswert innerhalb der zweiten voreingestellten Periode.

5. Verfahren nach einem der Ansprüche 1-4, wobei das Verfahren ferner Folgendes umfasst:
Korrigieren von Ausgabeinformationen der Trägheitsmesseinheit basierend auf dem Temperaturdriftkalibrierungswert der Trägheitsmesseinheit und Erhalten eines Navigationskoppelnavigationsergebnisses basierend auf den korrigierten Ausgabeinformationen und einem Navigationskoppelnavigationsalgorithmus.

6. Vorrichtung zum Kalibrieren einer Temperaturdrift, wobei die Vorrichtung Folgendes umfasst: ein Messwerterfassungsmodul (51) und ein Temperaturdriftkalibrierungswertbestimmungsmodul (52), die dazu ausgelegt sind, das Verfahren nach einem der Ansprüche 1 bis 5 zu implementieren.

7. Nichtflüchtiges computerlesbares Speichermedium, das Computeranweisungen speichert, wobei die Computeranweisungen ausführbar sind, um einen Computer zu veranlassen, das Verfahren zum Kalibrieren einer Temperaturdrift nach einem der Ansprüche 1-5 durchzuführen.

**Revendications**

1. Procédé d'étalonnage d'une dérive de température d'une unité de mesure inertielle intégrée dans un dispositif de déplacement, le procédé comprenant :

acquérir (S101) une première valeur de vitesse et une seconde valeur de vitesse, la première valeur de vitesse étant une valeur de vitesse d'une vitesse à un moment actuel déterminée sur la base de l'unité de mesure inertielle, et la seconde valeur de vitesse étant une valeur de mesure de la vitesse au moment actuel déterminée sur la base d'un système de positionnement global intégré dans le dispositif de déplacement; et
déterminer (S102) une valeur d'étalonnage de dérive de température de l'unité de mesure inertielle au moment actuel sur la base de la première valeur de vitesse et de la seconde valeur de vitesse;
dans lequel la détermination d'une valeur d'étalonnage de dérive de température de l'unité de mesure inertielle au moment actuel sur la base de la première valeur de vitesse et de la seconde valeur de vitesse, comprend:

déterminer (S202) une différence entre la première valeur de vitesse et la seconde valeur de vitesse;
acquérir (S203, S303) une valeur d'étalonnage de dérive de température d'un accéléromètre de l'unité de mesure inertielle dans un état stationnaire comprenant:

acquérir des valeurs d'accélération délivrées par l'accéléromètre de l'unité de mesure inertielle dans l'état stationnaire dans une première période prédéfinie;
déterminer une valeur de dérive de température initiale de l'accéléromètre de l'unité de mesure inertielle dans l'état stationnaire sur la base des valeurs d'accélération dans la première période prédéfinie, dans lequel les valeurs d'accélération dans la première période prédéfinie sont divisées en segments, et une valeur moyenne correspondant à chaque segment est calculée, et la médiane des valeurs moyennes est utilisée comme valeur de dérive de température initiale de l'accéléromètre de l'unité de mesure inertielle dans l'état stationnaire;

déterminer une valeur de vitesse initiale sur la base de la valeur d'accélération dans la première période prédéfinie et de la valeur de dérive de température initiale; et

déterminer la valeur d'étalonnage de dérive de température de l'accéléromètre de l'unité de mesure inertielle dans l'état stationnaire sur la base de la valeur de vitesse initiale;

dans lequel le procédé comprend en outre:

déterminer (S204, S304) la valeur d'étalonnage de dérive de température de l'unité de mesure inertielle au moment actuel, sur la base de la différence entre la première valeur de vitesse et la seconde valeur de vitesse, de la valeur d'étalonnage de dérive de température de l'accéléromètre de l'unité de mesure inertielle dans l'état stationnaire, et d'une valeur d'accélération délivrée par l'accéléromètre au moment actuel.

2. Procédé selon la revendication 1, dans lequel la détermination d'une valeur d'étalonnage de dérive de température de l'accéléromètre de l'unité de mesure inertielle au moment actuel, sur la base d'une différence entre la première valeur de vitesse et la seconde valeur de vitesse, de la valeur d'étalonnage de dérive de température de l'accéléromètre de l'unité de mesure inertielle dans l'état stationnaire, et d'une valeur d'accélération délivrée par l'accéléromètre au moment actuel, comprend:

déterminer la valeur d'étalonnage de dérive de température *bias*1 de l'accéléromètre de l'unité de mesure inertielle au moment actuel selon une formule comme suit:

$$Delta\_v = ((a - bias0 - bias1) * delta\_time1) * scale1$$
;

dans lequel, *Delta_v* est la différence entre la première valeur de vitesse et la seconde valeur de vitesse, *a* est la valeur d'accélération délivrée par l'accéléromètre au moment actuel, *bias*0 est la valeur d'étalonnage de dérive de température de l'accéléromètre de l'unité de mesure inertielle dans l'état stationnaire, *delta_time*1 est un temps de calcul intégral correspondant à l'accéléromètre de l'unité de mesure inertielle, et *scale*1 est une valeur d'échelle prédéfinie.

3. Procédé selon la revendication 1 ou 2, dans lequel la détermination de la valeur d'étalonnage de dérive de température de l'accéléromètre de l'unité de mesure inertielle dans l'état stationnaire sur la base de la valeur de vitesse initiale, comprend:

déterminer la valeur de dérive de température initiale comme la valeur d'étalonnage de dérive de température de l'accéléromètre de l'unité de mesure inertielle dans l'état stationnaire, si la valeur de vitesse initiale est 0; et corriger la valeur de dérive de température initiale pour obtenir la valeur d'étalonnage de dérive de température de l'accéléromètre de l'unité de mesure inertielle dans l'état stationnaire, si la valeur de vitesse initiale n'est pas 0.

4. Procédé selon l'une quelconque des revendications 1 à 3, dans lequel, après la détermination de la valeur d'étalonnage de dérive de température de l'accéléromètre de l'unité de mesure inertielle dans l'état stationnaire sur la base de la valeur de vitesse initiale, le procédé comprend en outre:

acquérir une valeur d'accélération délivrée par l'accéléromètre de l'unité de mesure inertielle dans une seconde période prédéfinie, lorsque l'unité de mesure inertielle est à nouveau dans l'état stationnaire; et mettre à jour la valeur d'étalonnage de dérive de température de l'accéléromètre de l'unité de mesure inertielle dans l'état stationnaire, sur la base de la valeur d'accélération dans la seconde période prédéfinie.

5. Procédé selon l'une quelconque des revendications 1 à 4, dans lequel le procédé comprend en outre:
corriger des informations de sortie de l'unité de mesure inertielle, sur la base de la valeur d'étalonnage de dérive de température de l'unité de mesure inertielle, et obtenir un résultat de navigation à l'estime, sur la base des informations de sortie corrigées et d'un algorithme de navigation à l'estime.

6. Appareil d'étalonnage d'une dérive de température, l'appareil comprenant : un module d'acquisition de valeur de mesure (51) et un module de détermination de valeur d'étalonnage de dérive de température (52), configurés pour mettre en oeuvre le procédé selon l'une quelconque des revendications 1 à 5.

7. Support de stockage non transitoire lisible par ordinateur, stockant des instructions informatiques, les instructions informatiques étant exécutables pour amener un ordinateur à réaliser le procédé d'étalonnage d'une dérive de température selon l'une quelconque des revendications 1 à 5.

S101

Acquiring a first measurement value and a second measurement value; the first measurement value being a measurement value of a to-be-measured quantity at a current moment determined based on an inertial measurement unit; and the second measurement value being a measurement value of the to-be-measured quantity at the current moment determined based on a global positioning system

S102

Determining a temperature drift calibration value of the inertial measurement unit at the current moment based on the first measurement value and the second measurement value

Fig. 1

S201

Acquiring a first measurement value and a second measurement value; the first measurement value being a measurement value of a to-be-measured quantity at a current moment determined based on an inertial measurement unit; and the second measurement value being a measurement value of the to-be-measured quantity at the current moment determined based on a global positioning system

S202

Determining a difference between the first measurement value and the second measurement value

S203

Acquiring a temperature drift calibration value of the inertial measurement unit in a stationary state

S204

Determining the temperature drift calibration value of the inertial measurement unit at the current moment, based on the difference and the temperature drift calibration value of the inertial measurement unit in the stationary state

Fig. 2

S301

Acquiring a first speed value and a second speed value; the first speed value being a measurement value of a to-be-measured quantity at a current moment determined based on an accelerometer of an inertial measurement unit; and the second speed value being a measurement value of the to-be-measured quantity at the current moment determined based on a global positioning system, the to-be-measured quantity being speed

S302

Determining a difference between the first speed value and the second speed value

S303

Acquiring a temperature drift calibration value of the accelerometer of the inertial measurement unit in a stationary state

S304

Determining the temperature drift calibration value of the accelerometer of the inertial measurement unit at the current moment, based on the difference between the first speed value and the second speed value, the temperature drift calibration value of the accelerometer of the inertial measurement unit in the stationary state, and the acceleration value output by the accelerometer at the current moment

Fig. 3

S401

Acquiring a first attitude angle and a second attitude angle; the first attitude angle being a measurement value of a to-be-measured quantity at a current moment determined based on a gyroscope of an inertial measurement unit; and the second attitude angle being a measurement value of the to-be-measured quantity at the current moment determined based on a global positioning system, the to-be-measured quantity being an angle

S402

Determining a difference between the first attitude angle and the second attitude angle

S403

Acquiring a temperature drift calibration value of the gyroscope of the inertial measurement unit in a stationary state

S404

Determining the temperature drift calibration value of the gyroscope of the inertial measurement unit at the current moment, based on the difference between the first attitude angle and the second attitude angle, the temperature drift calibration value of the gyroscope of the inertial measurement unit in the stationary state, and the angular velocity value output by the gyroscope at the current moment

Fig. 4

50

Apparatus for calibrating a temperature drift

51

Measurement value acquisition module

52

Temperature drift calibration value determination module

Fig. 5

Memory — 602

Input apparatus — 603

Bus —

Output apparatus — 604

Processor — 601

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170329019 A1
- CN 106403999 A

- US 20100292943 A1